# EUROPEAN PATENT APPLICATION

(11) **EP 3 088 154 A1**
(43) Date of publication of application: **02.11.2016**
(21) Application number: 14874637.3
(22) Date of filing: 05.11.2014
(51) Int. Cl.: B29C 45/14, B29C 33/12, G09F 9/00

(54) **METHOD AND DEVICE FOR PRODUCING INTEGRALLY MOLDED GLASS-RESIN ARTICLE**

(30) Priority: 27.12.2013 JP 2013272583; 02.05.2014 WO PCT/JP2014/062192
(71) Applicant: Asahi Glass Company, Limited, Tokyo 100-8405 (JP)
(72) Inventor: KOGANEZAWA, Koji, Tokyo 100-8405 (JP); SHIRATORI, Satoshi, Tokyo 100-8405 (JP); NAKAJIMA, Ryota, Tokyo 100-8405 (JP); TAKIKAWA, Jumpei, Tokyo 100-8405 (JP); OKADA, Kazuhiro, Sagamihara-shi Kanagawa 252-0212 (JP); WATANABE, Takuya, Sagamihara-shi Kanagawa 252-0212 (JP); MOTOJIMA, Takao, Sagamihara-shi Kanagawa 252-0212 (JP)
(74) Representative: Müller-Boré & Partner Patentanwälte PartG mbB
(86) International application number: PCT/JP2014/079363
(87) International publication number: WO 2015/098300

(57) **Abstract**

There are provided a process and an apparatus for producing an integrally molded glass/resin article which has a quality appearance.

A mold 12 with plate glass 2 placed therein is clamped, and a resin for forming a resin molding is injected into a cavity space 14 such that the resin is filled in the cavity space 14. After filling, the resin filled in the cavity space 14 is pressurized. At that time, the pressure applied to the plate glass 2 is controlled so as to be within a certain range. Thus, it is possible not only to avoid a crack or misregistration in the plate glass 2 but also to prevent a sink from being formed on a frame 3 as the resin molding, thereby to produce an integrally molded glass/resin article 1 having a quality appearance.

## Description

### TECHNICAL FIELD

The present invention relates to a process and an apparatus for producing an integrally molded glass/resin article.

### BACKGROUND ART

As the technique for producing an article with a resin molding integrally molded to a glass member, there has been known a technique for integrally molding a resin molding to a glass member by injection molding.

In various fields including electronic devices, such as smartphones or tablet terminals, glass for automobiles, and glass for building purposes, it has been desired to provide an integrally molded glass/resin article where a resin molding is jointed to a glass member such that two of a principle side of the glass member and a principle side of the resin molding that form a cosmetic surface of the integrally molded article are flush with each other at a jointed part (in other words, both sides have neither level differences nor gaps formed at a jointed part, i.e. produce a so-called flush surface).

For example, Patent Document 1 discloses a technique directed to the display panel of a smartphone, which places a glass member in a mold, followed by injecting a resin in the mold to integrally mold a resin molding to the glass member such that the resin molding is integrally molded to the periphery of the glass member so as to produce a continuous surface without having any level difference produced at a jointed part between the resin molding and the glass member.

By the way, such an article with a resin molding integrally molded to a glass member (hereinbelow, referred to as integrally molded glass/resin article) has had a problem in that if an undesirable recess (so-called sink) is formed on the resin molding, being caused by the volumetric shrinkage of the resin, or if a part of an injected resin enters between the dies forming a mold to form protrusion (so-called burr), the article is subjected to an extremely impaired appearance quality.

Although the occurrence of a sink can be overcome by increasing a glass-retaining pressure after resin injection (carrying out so-called pressure injection molding), an excessive increase in the glass-retaining pressure after resin injection causes a problem of generating a burr. Although the generation of a burr can be overcome by increasing the clamping pressure applied to a mold, an increase in the clamping pressure causes a problem of generating a crack in plate glass.

For example, Patent Document 2 discloses a technique which moves an insert with a glass member placed thereon during resin injection to prevent an excessive pressure from being applied to the glass member.

Further, Patent Document 3 discloses a technique where when a resin molding is integrally molded to a glass member, a certain part of a resin frame as the resin molding is pressed by a pressing member placed in a mold to carry out pressure injection molding thereby to prevent a sink from being formed.

### PRIOR ART DOCUMENTS

### PATENT DOCUMENTS

Patent Document 1: WO-A-2013-084550
Patent Document 2: JP-A-2006-69082
Patent Document 3: JP-A-2002-103384

### DISCLOSURE OF INVENTION

### TECHNICAL PROBLEM

It, however, has been difficult to produce an integrally molded glass/resin article free from gaps or level differences at such a jointed part and having a quality appearance by merely injecting a resin in a mold with plate glass placed therein and carrying out pressure injection molding.

The present invention is proposed, taking into account such circumstances. It is an object of the present invention to provide a process and an apparatus for producing an integrally molded glass/resin article which has the formation of gaps or level differences extremely minimized at a jointed part and has a quality appearance.

### SOLUTION TO PROBLEM

The present invention provides the following solutions in order to solve the object:

A first mode of the invention is directed to a process for producing an integrally molded glass/resin article having a resin molding on a periphery of a glass member, which includes a step of placing a glass member in a mold for molding a resin molding, clamping the mold, and sandwiching the glass member by the mold; a step of injecting an unsolidified resin for forming the resin molding into a cavity space formed at at least a part of the periphery of the glass member by clamping the mold, and filling the resin in the cavity space; and a step of subjecting the resin to pressure molding with the resin filled in the cavity space being pressured at a certain resin compression pressure; the process further including a step of adjusting a glass retaining pressure in cooperation with the pressurization of the resin, in the step of subjecting the resin to pressure molding, such that the glass retaining pressure applied to the glass member is within a certain range.

According to this mode, the mold with a glass member placed therein is clamped, a resin is injected into the cavity space and the resin is filled in the cavity space, followed by pressurizing, at a certain resin compression pressure, the resin filled in the cavity space. At that time, the glass retaining pressure applied to the glass member is adjusted in cooperation with the pressurization of the resin such that the glass retaining pressure is within a certain range. This mode not only avoids a crack or misregistration in the glass member but also prevents a sink from being formed on the resin molding, thereby to be capable of producing an integrally molded glass/resin article having a quality appearance.

A second mode of the invention is a mode wherein in the step of subjecting the resin to pressure molding in the process for producing an integrally molded glass/resin article recited in the first mode, the molding is carrying out while the glass-retaining pressure is increasing.

According to this mode, in the step of subjecting the resin to pressure molding, the molding is carrying out while the glass-retaining pressure is increasing. This mode can avoid not only a crack but also misregistration in the glass member.

A third mode of the invention is a mode wherein in the step of subjecting the resin to pressure molding in the process for producing an integrally molded glass/resin article recited in the first mode, the molding is carrying out while the glass-retaining pressure is decreasing.

According to this mode, in the step of subjecting the resin to pressure molding, the molding is carrying out while the glass-retaining pressure is decreasing. This mode can avoid not only misregistration but also a crack in the glass member. In a case where a resin having a high viscosity is employed, the clamping force should be set at a high value. When the clamping force increases, the glass-retaining pressure is applied to the glass member at a high value in the claiming stage. From this point of view, the molding is carrying out while the glass-retaining pressure applied to the glass member is decreasing in this case. Thus, it is possible to avoid not only misregistration but also a crack in the glass member.

A fourth mode of the invention is a mode wherein in the process for producing an integrally molded glass/resin article recited in any one of the first to third modes, the range of the glass-retaining pressure is set to have an upper limit lower than a pressure under which the glass member sandwiched by the mold is subjected to a crack and to have a lower limit higher than a pressure under which the glass member sandwiched by the mold is subjected to misregistration.

According to this mode, the range of the glass-retaining pressure is set to have an upper limit lower than a pressure under which the glass member sandwiched by the mold is subjected to a crack while the glass-retaining pressure is set to have a lower limit higher than a pressure under which the glass member sandwiched by the mold is subjected to misregistration. This mode not only avoids a crack or misregistration in the glass member but also prevents a sink from being formed on the resin molding, thereby to produce an integrally molded glass/resin article having a quality appearance.

A fifth mode of the invention is a mode wherein in the process for producing an integrally molded glass/resin article recited in any one of the first to fourth modes, the process further includes a resin cooling sub-step of cooling at least a part of the filled resin at the jointed part between the filled resin and the glass member as a subsequent step following the step of subjecting the resin to pressure molding or the step of adjusting the glass retaining pressure.

A part of the unsolidified resin filled in the cavity space and having a temperature not lower than the glass transition point (Tg), which is also referred merely to glass transition point (Tg) hereinbelow (soft resin having fluidity), is naturally cooled, is cooled to a temperature under the glass transition point to start being solidified, and finally loses fluidity, being solidified into a certain shape. A part of the unsolidified resin filled in the jointed part is being solidified, being filled in the jointed part, because of being pressurized in the step of subjecting the resin to pressure molding in the first mode. This arrangement allows the molding to be carried out without forming any sink at the jointed part.

A fifth mode of the invention is proposed for the purpose of reliably improving the advantages offered by the first mode, wherein a part of the unsolidified resin filled in the jointed part and subjected to pressure is cooled in the resin cooling sub-step. Specifically, a temperature difference is generated between that part of the unsolidified resin filled in the jointed part and the remaining parts of the unsolidified resin filled in the other positions (i.e. the other positions than the jointed part) such that that part of the unsolidified resin filled in the jointed part is solidified earlier than the remaining parts of the unsolidified resin filled in the other positions. This mode can more reliably prevent a sink from being formed at the jointed part.

Sixth mode of the invention is a mode wherein in the process for producing an integrally molded glass/resin article recited in the fifth mode, the filled resin starts to be cooled at the jointed part or at a surface thereof in touch with the mold in the resin cooling sub-step.

According to this mode, the filled unsolidified resin may start to be cooled at the jointed part in the resin cooling sub-step. The cooling is not limited to such operation. The unsolidified resin may start to be cooled not only at a surface thereof in touch with the mold but also at the part of the unsolidified resin filled in the jointed part in the resin cooling sub-step. The surface of the unsolidified resin in touch with the mold is cooled earlier than the inner part of the unsolidified resin to prevent a sink from being formed on the surface. This mode can provide the surface of the resin with an excellent appearance, which is appropriate to a case where the surface of the resin forms a cosmetic surface of the integrally molded article.

A seventh mode of the invention is a mode wherein in the process for producing an integrally molded glass/resin article recited in the fifth or sixth mode, the process further includes a resin-temperature-keeping sub-step of keeping the temperature of the filled resin at a temperature of not lower than the glass transition point (Tg) minus 10°C in any one of the steps from a step prior to the resin cooling sub-step to the resin cooling sub-step (such as any one of the plural steps prior to the resin cooling sub-step, including the step of subjecting the resin to pressure molding, the step of filling the resin and the step of subjecting the resin to pressure molding).

According to this mode, the temperature of the unsolidified resin filled in the cavity space is kept at a temperature of not lower than the glass transition point (Tg) minus 10°C in the resin-temperature-keeping sub-step. This arrangement provides the resin filled in the cavity space with a more moderate temperature-descending-gradient than the temperature-descending-gradient in a case where the resin filled in the cavity space is naturally cooled such that the resin is pressurized, keeping its soft state, to be filled in the jointed part without a gap in the step of subjecting the resin to pressure molding. It is possible not only to prevent a sink from being formed at the jointed part but also to minimize the formation of a level difference that could be formed at the jointed part since a part of the soft resin filled in the jointed part is cooled earlier than the remaining parts of the unsolidified resin (except a part of the resin surface in touch with the mold) in the resin cooling sub-step carried out in a later stage. Thus, it is possible to produce an integrally molded glass/resin article so as to have an improved quality.

It should be noted that the glass transition point (Tg) minus 10°C means a lower limit of temperature at which the resin can maintain a viscosity capable of being filled in every corner in the cavity space. Although the upper limit of temperature that the resin is allowed to have is not specified, the upper limit of temperature is a temperature at which the resin is prevented from being subjected to deterioration, and which varies depending on what the resin is made of. It should also be noted that the glass transition point (Tg) means a glass transition point (Tg) measured in accordance with JIS K7121, at which an amorphous solid is subjected to a rapid change in rigidity and viscosity in a narrow temperature range when being heated or cooled.

In the invention, solidification not only means that the viscosity of a resin increases such that the resin is solidified, but also include cases where a resin is cured, a thermally reversible thermoplastic resin is solidified, and a thermosetting resin is solidified. When the resin is made of a thermoplastic resin for example, the thermoplastic resin has a property of being molten by heating and of being solidified again (returning to a solid state) by cooling.

An eighth mode of the invention a mode wherein in the process for producing an integrally molded glass/resin article recited in the seventh mode, the process further includes a mold-preheating step of preheating the mold, as a step prior to the step of filling the resin, such that the temperature of the resin filled in the cavity space is kept at a temperature of not lower than the glass transition point (Tg) minus 10°C.

According to this mode, the soft resin filled in the cavity space is kept at a temperature of not lower than the glass transition point (Tg) minus 10°C since the mold is preheated in the mold-preheating step. In the mold-preheating step, it is not necessary to preheat the entire mold. It is sufficient to heat the inner wall surface of the mold forming the cavity space. In other words, it is sufficient that a preheating means is disposed along the inner wall surface of the mold.

A ninth mode of the invention is a mode wherein in the process for producing an integrally molded glass/resin article recited in any one of the first to eighth modes, the process further includes a demolding step of demolding a molded integrally molded glass/resin article out of the mold, wherein in the demolding step, a demolding means having a surface-like portion so as to form a part of the mold is moved in a demolding direction such that the surface-like portion of the demolding means pushes the molded article out of the mold.

According to this mode, when the integrally molded glass/resin article molded by the mold is demolded to be taken out of the mold, a part of the mold is utilized as the demolding means, and the demolding means is moved to the demolding direction such that the integrally molded glass/resin article is demolded by being pushed out of the mold. At that time, the demolding means presses the surface-like portion against the integrally molded glass/resin article to carry out demolding. In the demolding operation, the surface-like portion of the demolding means may be pressed against the glass member or the molded resin. When an attempt is made to press the surface-like portion against the glass member for demolding, a part of the molded resin at the jointed part is liable to be separated from the glass member by a stress applied to the jointed part because the molded resin has adhered to the mold immediately prior to the demolding operation. From this point of view, it is preferred that the surface-like portion be pressed against the molded resin. Although there is a method of employing a pointed member, such as a pin, to demold the integrally molded glass/resin article, the integrally molded glass/resin article is likely to be subjected to damage caused by being pressed against the pointed member. From this point of view, it is preferred to utilize the surface-like portion of the demolding means. Further, when the surface-like portion is pressed against the molded resin in a case where the molded resin is a rectangular frame member for example, it is preferred to press the surface-like portion against a corner of the frame member firmly adhering to the mold from the viewpoint of smoothly demolding the integrally molded glass/resin article out of the mold. It should be noted that the surface-like portion may be pressed against the entire peripheral end face, the end faces of two opposed sides, and the end faces of two adjacent sides of the frame member.

A tenth mode of the invention is a mode wherein in the process for producing an integrally molded glass/resin article recited in any one of the first to ninth modes, the glass member is plate glass.

According to this mode, it is possible to produce an integrally molded glass/resin article wherein the glass member is made of plate glass which has a resin molding integrally molded to a peripheral edge thereof.

An eleventh mode of the invention is a mode wherein in the process for producing an integrally molded glass/resin article recited in the tenth mode, a principle side of the plate glass and a principle side of the resin molding, which at least partly form a cosmetic surface of the integrally molded article, are flush with each other.

According to this mode, an integrally molded glass/resin article is produced wherein a principle side of the plate glass and a principle side of the resin molding are flush with each other. In this case, it is possible to produce a high quality of integrally molded glass/resin article which has no gap or level difference produced at a jointed part between the plate glass and the resin molding.

A twelfth mode of the invention is a mode wherein in the process for producing an integrally molded glass/resin article recited in the tenth or eleventh mode, the plate glass has a chamfered part formed at a corner between the principal side and a lateral side face.

According to this mode, a plate glass that has a chamfered part formed at a corner between the principal side and a lateral side face is employed. Thus, handling the plate glass is made easier. Further, it is possible to produce a high quality of integrally molded glass/resin article which has no gap or level difference produced at a jointed part between the plate glass and the resin molding.

A thirteenth mode of the invention is a mode wherein in the process for producing an integrally molded glass/resin article recited in any one of the tenth to twelfth modes, the plate glass has an adhesive layer disposed on a side to be bonded with the resin molding.

According to this mode, a plate glass that has an adhesive layer formed on a side to be bonded with the resin molding is employed. Thus, it is possible to more firmly bond the plate glass and the resin molding.

A fourteenth mode of the invention provides an apparatus for producing an integrally molded glass/resin article with a resin molding disposed on a periphery of a glass member, the apparatus including a mold having a first die and a second die combined such that the mold is clamped to sandwich a glass member between the first die and the second die and to form a cavity space at least partly around the periphery of the clamped glass member so as to have a shape corresponding to a shape of the resin molding, and a resin injection means for injecting an unsolidified resin into the cavity space of the clamped mold; wherein at least one of the first die and the second die is configured such that at least one part of a glass member retaining portion for retaining the glass member is disposed as a first movable portion so as to be movable along a clamping direction, at least one part of an area forming the cavity space is disposed as a second movable part so as to be movable along the clamping direction; and wherein the apparatus further includes a resin pressurizing means for moving the second movable part to pressurize the resin filled in the cavity space, and a glass retaining pressure adjusting means for moving the first movable portion to adjust a glass retaining pressure applied to the glass member such that the glass retaining pressure applied to the glass member is within a certain range during pressurization by the resin pressuring means.

According to this mode, at least one part of the glass member retaining portion is disposed as the first movable portion so as to be movable along the clamping direction. The glass retaining pressure adjusting means moves the first movable portion to adjust a glass retaining pressure applied to the glass member. Further, at least one part of the area forming the cavity space is disposed as the second movable part so as to be movable along the clamping direction. The resin pressurizing means moves the second movable part to pressurize the resin filled in the cavity space.

A fifteenth mode of the invention is a mode wherein in the apparatus for producing an integrally molded glass/resin article recited in the fourteenth mode, the glass retaining pressure adjusting means includes a glass retaining pressure controlling means which adjusts, in cooperation with the pressurization of the resin by the resin pressurizing means, the glass retaining pressure applied to the glass member.

Since the glass retaining pressure controlling means adjusts, in cooperation with the pressurization of the resin by the resin pressurizing means, the glass retaining pressure applied to the glass member according to this mode, this mode offers advantages of not only avoiding a crack or misregistration in the glass member but also preventing a sink from being formed on the resin molding, thereby to produce an integrally molded glass/resin article having a quality appearance.

A sixteenth mode of the invention is a mode wherein in the apparatus for producing an integrally molded glass/resin article recited in the fifteenth mode, the glass retaining pressure controlling means sets the glass retaining pressure within a certain range from a lower pressure than a pressure under which the glass member clamped by the mold is subjected to a crack to a higher pressure than a pressure under which the glass member clamped by the mold is subjected to misregistration.

Since the certain range of the glass retaining pressure is set so as to be from a lower pressure than a pressure under which the glass member clamped by the mold is subjected to a crack to a higher pressure than a pressure under which the glass member clamped by the mold is subjected to misregistration according to this mode, this mode offers advantages of not only avoiding a crack or misregistration in the glass member but also preventing a sink from being formed on the resin molding, thereby to produce an integrally molded glass/resin article having a quality appearance.

A seventeenth mode of the invention is a mode wherein in the apparatus for producing an integrally molded glass/resin article recited in any one of the fourteenth to sixteenth modes, the resin pressurizing means includes a resin pressurizing cylinder to move the second movable part to pressurize the resin filled in the cavity space, and a cylinder controlling means for resin pressurization.

Since the resin pressurizing means includes the resin pressurizing cylinder to move the second movable part and a cylinder controlling means for resin pressurization according to this mode, this mode offers advantages of finely controlling the volume of the cavity space in a variable manner, and being capable of moving a part of the mold forming the cavity space 14 thereby to effectively prevent a sink from being formed due to a decrease in the volume of the resin caused by solidification of the resin and to control the formation of a gap or level difference at the jointed part.

An eighteenth mode of the invention is a mode wherein in the apparatus for producing an integrally molded glass/resin article recited in any one of the fourteenth to sixteenth modes, the resin pressurizing means is a spring to urge the second movable part in the clamping direction such that the first die and the second die are moved in a direction to be brought closer to each other to pressurize the resin filled in the cavity space.

Since the resin pressurizing means is a spring to urge the second movable part in the clamping direction such that the volume of the cavity space is controlled in a variable manner according to this mode, this mode allows the part of the mold forming the cavity space 14 to be autonomously moved in a certain distance by an urging force of the spring thereby to offer advantages of effectively preventing a sink from being formed due to a decrease in the volume of the resin caused by solidification of the resin and controlling the formation of a gap or level difference at the jointed part.

An nineteenth mode of the invention is a mode wherein in the apparatus for producing an integrally molded glass/resin article recited in any one of the fourteenth to eighteenth modes, the glass retaining pressure adjusting means is a spring to urge the glass member retaining portion in the clamping direction.

Since the glass retaining pressure adjusting means is a spring to urge the glass member retaining portion in the clamping direction according to this mode, this mode allows the glass retaining pressure to be autonomously controlled in a certain range by an urging force of the spring thereby to offer an advantage of effectively avoiding a crack or misregistration in the glass member.

An twentieth mode of the invention is a mode wherein in the apparatus for producing an integrally molded glass/resin article recited in any one of the fourteenth to eighteenth modes, the glass retaining pressure adjusting means includes a glass retaining pressure adjusting cylinder to move the first movable part to adjust a pressure applied to the glass member and a cylinder controlling means for glass retaining pressure adjustment to control the glass retaining pressure adjusting cylinder.

Since the glass retaining pressure adjusting means includes a glass retaining pressure adjusting cylinder to move the first movable part and a cylinder controlling means for glass retaining pressure adjustment to control the glass retaining pressure adjusting cylinder according to this mode, this mode finely controls the glass retaining pressure to offer an advantage of effectively avoiding a crack or misregistration in the glass member.

A twenty-first mode of the invention is a mode wherein in the apparatus for producing an integrally molded glass/resin article recited in any one of the fourteenth to twentieth modes, the mold further includes a cooling means for cooling the resin filled in the cavity space.

According to this mode, the cooling means cools the unsolidified resin. In the cooling operation, a part of the unsolidified resin at the jointed part can be cooled earlier than the remaining parts of the unsolidified resin to reliably avoid the formation of a sink on the part of the resin at the jointed part.

An twenty-second mode of the invention is a mode wherein in the apparatus for producing an integrally molded glass/resin article recited in any one of the fourteenth to twenty-first modes, the mold further includes a resin temperature keeping means for keeping the temperature of the resin filled in the cavity space at a temperature of not lower than the glass transition point (Tg) minus 10°C.

Since the resin temperature keeping means can keep the temperature of the unsolidified resin at a temperature of not lower than the glass transition point (Tg) minus 10°C to delay the solidification of the resin according to this mode, this mode can spread the resin to the jointed part.

An twenty-third mode of the invention is a mode wherein in the apparatus for producing an integrally molded glass/resin article recited in the twenty-second mode, the resin temperature keeping means includes a heater to heat at least the mold.

According to this mode, a heater is utilized as the resin temperature keeping means to heat the mold such that the unsolidified resin can be filled in the mold so as to spread to every corner of the mold during filling operation. Further, this mode offers advantages of not only controlling the formation of a sink at a desired part, such as the jointed part, but also minimizing the formation of a level difference that could be formed at the jointed part because of modifying a solidification speed or a solidification position during solidification of the resin.

### ADVANTAGEOUS EFFECTS OF INVENTION

In accordance with the present invention, it is possible not only to produce an integrally molded glass/resin article which has the formation of gaps or level differences extremely minimized at a jointed part and has a quality appearance but also to provide a process and an apparatus for producing an integrally molded glass/resin article wherein such features are realized.

### BRIEF DESCRIPTION OF DRAWINGS

Fig. 1 is a perspective view of an example of the integrally molded glass/resin article according to the present invention.
Fig. 2 is a cross-sectional view taken along line 2-2 of Fig. 1.
Fig. 3 is a front cross-sectional view showing the apparatus for producing an integrally molded glass/resin article according to a first embodiment of the present invention.
Figs. 4(A) to 4(F) are views showing a procedure to employ the apparatus for producing an integrally molded glass/resin article to produce an integrally molded glass/resin article.
Fig. 5 is a schematic view showing an example of pressure control for plate glass during resin pressurization.
Fig. 6 is a schematic view showing another example of pressure control for plate glass during resin pressurization.
Fig. 7 is a front cross-sectional view showing the apparatus for producing an integrally molded glass/resin article according to a second embodiment of the present invention.
Fig. 8 is a front cross-sectional view showing the apparatus for producing an integrally molded glass/resin article according to a third embodiment of the present invention.
Fig. 9 is a cross-sectional view showing an integrally molded glass/resin article demolded from a fixed die, and the fixed die.
Figs. 10(A) and 10(B) are a graph showing a comparison in resin-temperature-descending-gradient between a production process including no resin cooling sub-step and a first production process by use of the production apparatus according to the third embodiment, and a comparison in resin-temperature-descending-gradient between a production process including neither resin cooling sub-step nor resin cooling sub-step and a second production process by use of the production apparatus according to the third embodiment, respectively.
Figs. 11 (A) and 11 (B) are enlarged cross-sectional views of essential parts showing how a resin is filled in a cavity space and showing how the resin filled in a jointed part is solidified, respectively.

### DESCRIPTION OF EMBODIMENTS

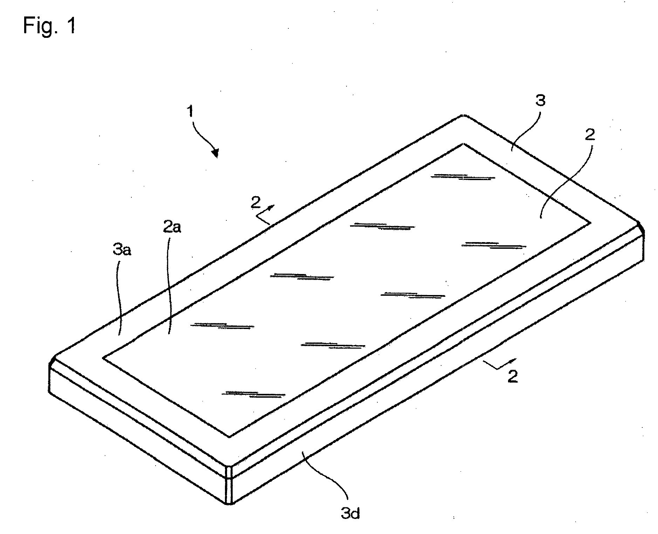

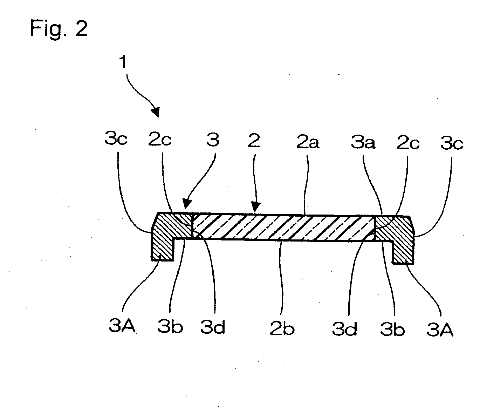

Fig. 1 is a perspective view of an example of the integrally molded glass/resin article according to the present invention. Fig. 2 is a cross-sectional view taken along line 2-2 of Fig. 1.

The integrally molded glass/resin article 1 is configured such that a resin frame 3 as the resin molding is integrally molded to the periphery of plate glass 2, which is employed as one preferred example of the glass member according to the present invention. In Description, the resin frame as the resin molding is denoted by reference numeral 3 while the resin, which is injected and filled in the cavity space of a mold to form the frame, will be also denoted by the same reference numeral 3.

The plate glass 2 is formed in a rectangular planar shape, and has a glass front surface forming at least a part of a cosmetic surface of the integrally molded glass/resin article (principle side) 2a, a glass rear surface 2b and four glass lateral end faces.

The frame 3 is formed in a rectangular frame shape having a rectangular opening formed at a central area thereof, and has a resin front surface so as to form at least a part of the cosmetic surface of an integrally molded glass/resin article (principle side) 3a, a resin rear surface 3b, four outer resin lateral end faces 3c, and four inner resin lateral end faces 3d. The resin rear surface 3b has a frame-like leg 3A formed thereon along a peripheral edge thereof. The leg 3A has respective lateral end faces forming parts of the respective outer resin lateral end faces 3c.

The inner resin lateral end faces 3d of the frame 3 serve as joining surfaces with the plate glass 2 and are configured so as to have the same height as the glass lateral end faces 2c of the plate glass 2. The integrally molded glass/resin article 1 is configured such that the glass lateral end faces 2c of the plate glass 2 are jointed to the inner resin lateral end faces 3d so as to unify the plate glass 2 and the frame 3. In the plate glass 2 and the frame 3 thus unified, the glass front surface 2a and the resin front surface 3a are flush with each other while the glass rear surface 2b and the resin rear surface 3b are flush with each other. In other words, the glass plate 2 and the frame 3 are jointed to each other such that no level difference is produced between the glass front surface 2a and the resin front surface 3a and between the glass rear surface 2b and the resin rear surface 3b. Specifically, the plate glass and the frame are jointed to each other such that the level difference between the glass front surface 2a and the resin front surface 3a at a jointed part is at most 20 µm, preferably at most 10 µm.

### «Apparatus for producing an integrally molded glass/resin article»

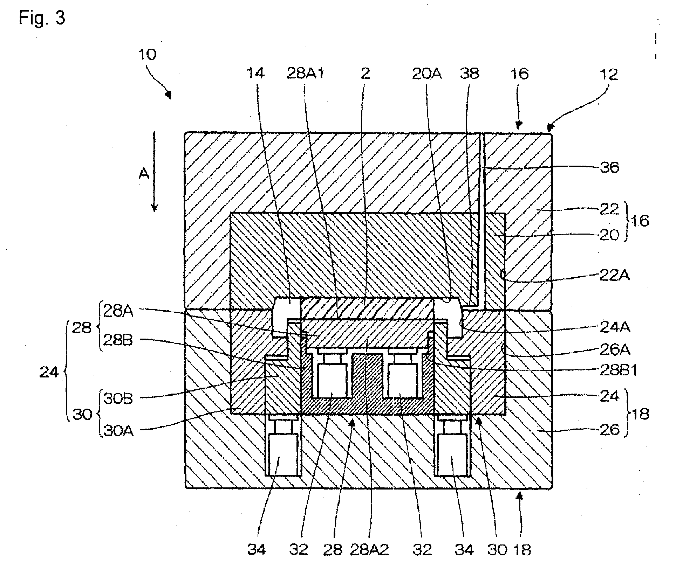

Fig. 3 is a front cross-sectional view showing the apparatus for producing an integrally molded glass/resin article according to a first embodiment of the present invention.

As shown in Fig. 3, the apparatus for producing an integrally molded glass/resin article 10 according to this embodiment is configured to include a mold 12 having a first die and a second die combined such that the mold is clamped to sandwich the glass member between the first die and the second die and to form a cavity space at least partly around the periphery of the clamped glass member so as to have a shape corresponding to a shape of the resin molding, an unshown clamping unit for clamping the mold 12, and an unshown injection molding machine for injecting an unsolidified resin into a cavity space 14 formed by the clamped mold 12, and an unshown controller for collectively controlling the operations of the entire apparatus.

### «Mold»

At least one of the first die and the second die is configured such that at least one part of a glass member retaining portion for holding the glass member is disposed as a first movable part so as to be movable along a clamping direction, and one part of an area forming the cavity space is disposed as a second movable part so as to be movable along the clamping direction.

The mold 12 in the shown embodiment is configured to include a movable die 16 as the first die disposed on an upper side in a vertical direction, and a fixed die 18 as the second die disposed on a lower side in the vertical direction.

### [Movable die]

The movable die 16 is configured to have a nesting structure and to include a movable cavity block 20 forming a space where a resin material for the frame 3 is injected, and a movable mold 22 to which the movable cavity block 20 is mounted.

The movable cavity block 20 is formed in a rectangular parallepiped shape in the shown embodiment and includes a movable recess 20A on a surface facing the fixed die 18 (i.e. a lower surface in the vertical direction). The movable recess 20A is formed in a shape corresponding to the shape of an upper part of the integrally molded glass/resin article 1, which is obtained by dividing the integrally molded glass/resin article into two of upper and lower parts (i.e. a part of the article close to the glass front surface 2a).

The movable mold 22 includes a movable cavity block fitting portion 22A formed therein on a surface facing the fixed die 18 (i.e. a lower surface in the vertical direction) so as to be capable of being equipped with the movable cavity block 20. The movable cavity block fitting portion 22A is configured as a recess with which the movable cavity block 20 is engageable. The movable cavity block 20 is mounted to the movable mold 22 by being fit into the movable cavity block fitting portion 22A and being fastened to the movable mold 22 by use of an unshown fastening means.

### [Fixed die]

The fixed die 18 is also configured to have a nesting structure like the movable die 16 and to include a fixed cavity block 24 forming a space where the resin material for the frame 3 is injected, and a fixed mold 26 to which the fixed cavity block 24 is mounted.

The fixed cavity block 24 is formed in a rectangular parallepiped shape in the shown embodiment and includes a fixed recess 24A on a surface facing the movable die 16. The fixed recess 24A is formed in a shape corresponding to the shape of a lower part of the integrally molded glass/resin article 1, which is obtained by dividing the integrally molded glass/resin article into two of upper and lower parts (i.e. a part of the article close to the glass rear surface 2a).

The fixed cavity block 24 is configured to have a plate glass retaining block 28 for retaining the plate glass 2 incorporated into a cavity space forming block 30 so as to form a nesting structure in the fixed cavity block. At least a part of the plate glass retaining block 28 serves as the first movable part while at least a part of the cavity space forming block 30 serves as the second movable part, which will be described in details later.

The fixed mold 26 includes a fixed cavity block fitting portion 26A formed therein on a surface facing the movable die 16 (i.e. an upper surface in the vertical direction) so as to be capable of being equipped with the fixed cavity block 24. The fixed cavity block fitting portion 26A is configured as a recess with which the fixed cavity block 24 is engageable. The fixed cavity block 24 is mounted to the fixed mold 26 by being fit into the fixed cavity block fitting portion 26A.

As described above, the fixed cavity block 24 is configured to have the plate glass retaining block 28 incorporated into the cavity space forming block 30.

The plate glass retaining block 28 is configured to include a plate glass retaining portion 28A and a base portion 28B.

The plate glass retaining portion 28A, which corresponds to the glass member retaining portion, is formed so as to have an outer shape adapted to the shape of the plate glass 2 and has a plate glass placement surface 28A1 formed on an upper side thereof in the vertical direction for placing the plate glass 2 thereon. When employed plate glass is plate glass in a planar plate shape, the plate glass placement surface 28A1 has a planar surface. The plate glass retaining portion 28A has a guiding convex portion 28A2 formed on a lower side thereof in the vertical direction.

The base portion 28B serves as a guide portion for the plate glass retaining portion 28A and has a guiding recess 28B1 formed in an upper portion thereof in the vertical direction so as to be engageable with the guiding convex portion 28A2 of the plate glass retaining portion 28A. The plate glass retaining portion 28A is supported so as to be movable in a clamping direction A of the mold 12 denoted by an arrow symbol A in Fig. 3 by bringing the guiding convex portion 28A2 in engagement with the guiding recess 28B1. In other words, the plate glass retaining portion 28A serves as the first movable part.

The base portion 28B includes a plurality of glass retaining pressure adjusting cylinders 32 as the glass retaining pressure adjusting means. The respective glass retaining pressure adjusting cylinders 32 are activated in synchronism with one another to move the plate glass retaining portion 28A in a direction along the clamping direction of the mold 12.

The cavity space forming block 30 is configured to have an outer hollow block 30A and an inner hollow block (i.e. second movable part) 30B combined in a nesting structure.

The outer hollow block 30A may be formed in an angular cylindrical shape, for example, and has the inner hollow block 30B disposed in a hollow area so as to be slidable.

When the fixed cavity block 24 is fit in the fixed cavity block fitting portion 26A, the cavity space forming block 30 has the outer hollow block 30A placed on the bottom of the fixed cavity block fitting portion 26A. Thus, the outer block 30A is fixed.

Further, the fixed cavity block 24 is fit in the fixed cavity block fitting portion 26A, the plate glass retaining block 28 has the base portion 28B placed on the bottom of the fixed cavity block fitting portion 26A. Thus, the base portion 28B is fixed such that it becomes possible to move the plate glass retaining portion 28A by use of the glass retaining pressure adjusting cylinders 32.

The fixed mold 26 includes a plurality of resin pressurizing cylinders 34 as the resin pressurizing means. The resin pressurizing cylinders 34 are activated in synchronism with one another to move the inner hollow block 30B of the cavity space forming block 30 in a direction along the clamping direction. Thus, the volume of the cavity space 14 is made variable such that it is possible to pressurize the resin filled in the cavity space 14. Since the inner hollow block 30B is actuated, independently of the fixed cavity block 24, by the resin pressurizing cylinders 34, the inside of the cavity space 14 is partly subjected to a volume change to effectively prevent a sink from being formed due to a decrease in the volume of the resin caused by solidification of the resin and to control the formation of a gap or level difference at the jointed part.

The inner hollow block 30B is positioned at a preset "resin injection position" at the time of resin injection. After resin injection, the inner hollow block is moved to a preset "resin pressurizing position", being driven by the resin pressurizing cylinders under the control of an unshown cylinder controlling means for resin pressurization for controlling the resin pressurizing cylinders. The resin pressurizing position is set at a higher level than the resin injection position in the vertical direction such that the volume of the cavity space 14 is reduced by a certain amount at the resin pressurizing position. As a result, the volume of the cavity space 14 can be finely controlled in response to a decrease in the volume of the resin caused by solidification of the resin. Thus, it is possible to produce an integrally molded glass/resin article which is capable of effectively preventing a sink from being formed and which has the formation of gaps or level differences extremely minimized at the jointed part and has a quality appearance.

The mold 12 is configured as described above. When the mold 12 is clamped with the plate glass 2 being placed on the plate glass placement surface 28A1, the plate glass 2 is sandwiched between the fixed die 18 and the movable die 16 to form the cavity space 14 around the periphery of the plate glass 2.

The plate glass retaining portion 28A, which serves as the first movable part of the plate glass retaining block 28 with the plate glass 2 placed thereon, is disposed so as to be movable, independently of the cavity space forming block 30, by the glass retaining pressure adjusting cylinders 32. Thus, the glass retaining pressure adjusting cylinders 32 are utilized to move the plate glass retaining portion 28A to independently and finely adjust the pressure applied to the plate glass 2 and to effectively avoid a crack in the glass member.

In the cavity space forming block 30 forming the cavity space 14, the inner block 30B as the second movable part is disposed so as to be movable by the resin pressurizing cylinders 34. Thus, the resin pressurizing cylinders 34 are utilized to move the cavity space forming block 30 to pressurize the resin filled in the cavity space 14.

It should be noted that the resin for the resin molding is injected through the movable die 16. The movable die 16 has a sprue 36 and a gate 38 formed to serve as a resin passage. The resin injected into the sprue 36 through an injection unit is injected into the cavity space 14 through the gate 38 from the sprue 36.

### <Clamping unit>

A clamping unit (not shown) reciprocatively moves the movable die 16 with respect to the fixed die 18 to open and clamp the mold 12. When the movable die 16 is moved in a direction closer to the fixed die 18, the mold 12 is clamped. When the movable die 16 is moved in a direction away from the fixed die 18, the mold 12 is opened.

### <Injection unit>

The injection unit (not shown) serves as a resin injection means and injects an unsolidified resin into the cavity space 14 through the sprue 36 in the mold 12.

### <Controller>

A controller (not shown) collectively controls the operations of the entire apparatus. In other words, the controller controls the clamping unit to control the opening and clamping operations of the mold 12. Further, the controller controls the injection unit to control the injection of the resin.

Further, the controller controls the resin pressurizing cylinders 34 to control the pressurization of the resin filled in the cavity space 14 (in other words, the controller serves as the resin pressuring cylinder controlling means). Further, the controller controls the glass retaining pressure adjusting cylinders 32 in cooperation with the pressurization of the resin by the resin pressurizing cylinders 34 to control the glass retaining pressure applied to the plate glass 2 (in other words, the controller serves as the glass retaining pressure controlling means and the cylinder controlling means for glass retaining pressure adjustment).

### «Process for producing integrally molded glass/resin article»

Now, a process for producing an integrally molded glass/resin article by use of the apparatus for producing an integrally molded glass/resin article 10 will be described.

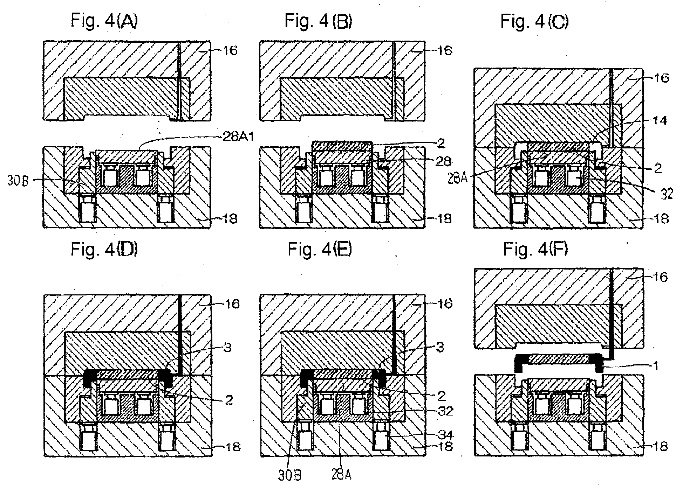

Figs. 4(A) to 4(F) are views showing a procedure to employ the apparatus for producing an integrally molded glass/resin article 10 to produce an integrally molded glass/resin article 1.

As shown in Fig. 4(A), the mold 12 is opened in an initial state such that the movable die 16 is positioned at a certain level away from the fixed die 18. In this state, the inner block 30B disposed in the fixed die 18 is set at the resin injection position.

First, as shown in Fig. 4(B), the plate glass 2 is placed in the mold 12. The plate glass 2 is placed in the mold 12, being carried on the plate glass placement surface 28A1 of the plate glass retaining block 28 disposed in the fixed die 18.

Next, as shown in Fig. 4(C), the movable die 16 is moved toward the fixed die 18 by the clamping unit not shown to clamp the mold 12. Thus, the plate glass 2 is sandwiched between the fixed die 18 and the movable die 16 while the cavity space 14 is formed around the periphery of the plate glass 2.

At that time, the position of the plate glass retaining portion 28A is controlled by controlling the glass retaining pressure adjusting cylinders 32 such that the pressure applied to the plate glass 2 becomes a certain pressure.

Next, as shown in Fig. 4(D), by the injection unit (not shown), a resin as a material forming the resin molding is injected into the cavity space 14 to be filled in the cavity space 14.

Next, as shown in Fig. 4(E), the resin pressurizing cylinders 34 are activated to move the inner block 30B as the second movable part to the resin pressurizing position to carry out resin pressure molding while the resin filled in the cavity space is pressurized by a certain resin compression pressure. Thus, it is possible to integrally mold the frame 3 to the periphery of the plate glass 2 without having any gap or level difference produced at the jointed part between the plate glass 2 and the frame 3. Further, it is possible to prevent a sink from being formed on the frame 3.

On the other hand, when the resin filled thus is pressurized, the plate glass 2 is likely to be subjected to a crack or misregistration because a high pressure is applied to the plate glass 2.

For this reason, the glass retaining pressure adjusting cylinders 32 is utilized to control the position of the plate glass retaining portion 28A in cooperation with the pressurization of the resin such that the pressure applied to the plate glass 2 is within a certain range. Specifically, the position of the plate glass retaining portion 28A is controlled such that the position is lowered to decrease the pressure applied to the plate glass 2 when the plate glass is likely to be subjected to a crack because the pressure is increased in response to the pressurization of the resin while the position is raised to increase the pressure applied to the plate glass 2 when the plate glass is likely to be subjected to misregistration because the pressure is low during resin pressurization.

The certain range is set to have an upper limit lower than a pressure under which the plate glass 2 sandwiched between the fixed die 18 and the movable die 16 is subjected to a crack and to have a lower limit higher than a pressure under which the plate glass 2 sandwiched between the fixed die 18 and the movable die 16 is subjected to misregistration. Thus, it is possible to avoid a crack or misregistration in the plate glass 2 and to prevent a burr from being formed.

The pressurization is continuously made for a certain period of time, and then, as shown in Fig. 4(F), the mold 12 is opened to take out the integrally molded glass/resin article 1. In this way, the production of the integrally molded glass/resin article 1 is completed by these series of steps.

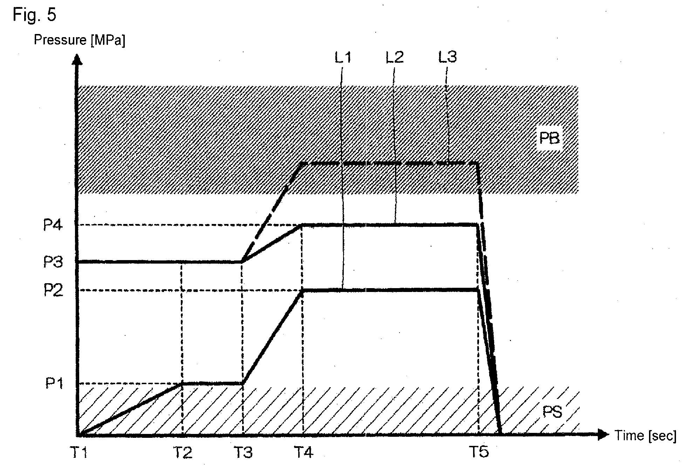

Fig. 5 is a schematic views showing an example of pressure control for plate glass during resin pressurization.

In this figure, a polygonal line L1 indicated by a solid line represents the transition of a pressure applied to the resin injected into the cavity space 14. On the other hand, a polygonal line L2 indicated by a solid line represents the transition of a pressure applied to the plate glass 2 when the pressure control is performed. In this figure, T1, T2, T3, T4 and T5 represent a time when the injection of the resin into the cavity space 14 started, a time when the injection of the resin into the cavity space 4 was completed, a time when the resin pressurization started, a time when the pressurization was completed and a time when the mold was opened, respectively.

Further, in this figure, a shaded region PB having a closer spacing represents a pressure region where the plate glass 2 is subjected to a crack while a shaded region PS having a wide spacing represents a pressure region where the plate glass 2 is subjected to misregistration.

As shown in this figure, misregistration occurs at a lower pressure than the pressure applied to the resin at the time of injection completion (in other words, the pressure applied to the resin at the time T2).

The pressure applied to the plate glass 2 is controlled so as not to be in the ranges shown by the shaded regions PB and PS in the steps including the step of resin pressurization.

In the example shown in Fig. 5, control is made such that the plate glass 2 is also pressurized during resin pressurization. The pressure is controlled so as to be within a pressure range where the plate glass 2 is not subjected to a crack (in other words, the range where the pressure is not within the shaded region PB). Thus, it is possible not only to avoid a crack or misregistration in the plate glass 2 and the formation of a burr but also to prevent a sink from being formed on the frame 3.

It should be noted that in Fig. 5, a polygonal line L3 indicated by a broken line represents the transition of a pressure applied to the plate glass 2 when no pressure control is performed. When the pressure applied to the plate glass 2 is not controlled during resin pressurization, the plate glass 2 is subjected to a crack because the pressure applied to the plate glass 2 is also increased, being affected by the resin pressurization.

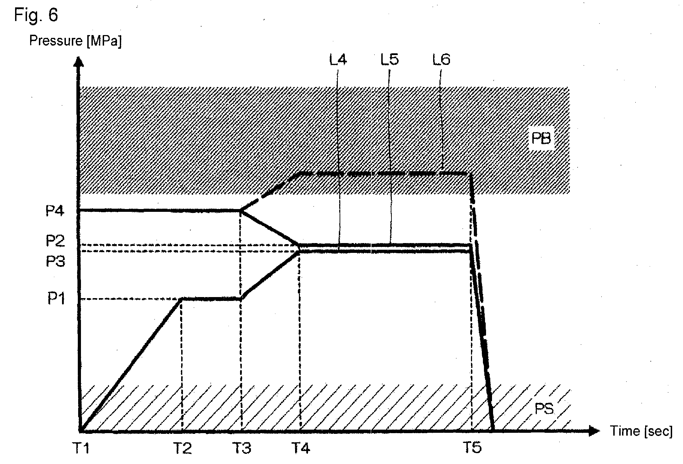

Fig. 6 is a schematic view showing another example of the pressure control for plate glass during resin pressurization.

In this figure, a polygonal line L4 indicated by a solid line represents the transition of a pressure applied to the injected resin. A polygonal line L5 indicated by a solid line represents the transition of a pressure applied to the plate glass 2 when pressure control was performed.

In the example shown in this figure, the pressure control is performed such that the pressure applied to the plate glass 2 is decreased during resin pressurization. It should be noted that the range where the pressure decreases is set at a pressure range where misregistration does not occur (in other words, a range excluding the shaded region PS). Thus, it is possible not only to avoid a crack or misregistraion in the plate glass 2 and the formation of a burr but also to prevent a sink from being formed on the frame 3.

It should be noted that in Fig. 6, a polygonal line L6 indicated by a broken line represents the transition of a pressure applied to the plate glass 2 when no pressure control is performed. When the pressure applied to the plate glass 2 is not controlled during resin pressurization, the plate glass 2 is subjected to a crack because the pressure applied to the plate glass 2 is also increased, being affected by the resin pressurization.

As described above, the mode to control the pressure applied to the plate glass 2 during resin pressurization is classified Into two modes of a mode to increase the pressure in comparison with that before resin pressurization and a mode to decrease the pressure in comparison with that before resin pressurization. Selection of the two modes is determined in consideration of the viscosity etc. of an employed resin. Specifically, when an employed resin has a high viscosity, a high pressure has been already applied to the plate glass 2 since before resin pressurization. For this reason, the pressure applied to the plate glass 2 is controlled to be decreased during resin pressurization in such a case. Thus, it is possible to effectively prevent the plate glass 2 from being cracked. On the other hand, when an employed resin has a low viscosity, the pressure applied to the plate glass 2 is low before resin pressurization, though being not shown in Fig. 6. For this reason, the pressure applied to the plate glass 2 is increased in cooperation with the pressure applied to the plate glass 2 during resin pressurization. But, when the increased pressure is lower than the shaded region PB, it is not necessary to independently control the pressure for retaining the plate glass because the plate glass is not subjected to a crack. At that time, when each of the pressure applied to the resin and the pressure applied to the plate glass 2 are within the desired range, it is possible to effectively prevent a sink from being generated on an integrally molded glass/resin particle.

### «Apparatus for producing integrally molded glass/resin article according to second embodiment»

### <Apparatus structure>

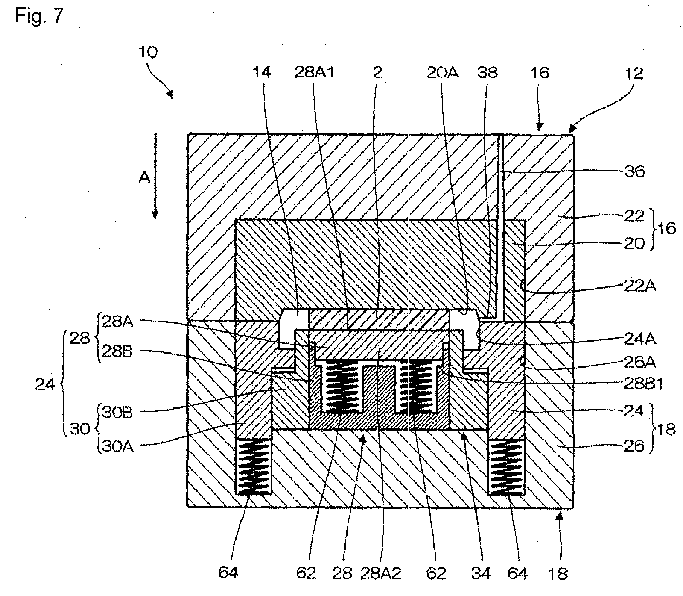

Fig. 7 is a front cross-sectional view showing the apparatus for producing an integrally molded glass/resin article according to a second embodiment of the present invention.

The apparatus for producing an integrally molded glass/resin article 10 is different from the apparatus for producing an integrally molded glass/resin article shown in Fig. 3 in terms of the structures of its glass retaining pressure adjusting means and resin pressurizing means. For this reason, only the structures of the glass retaining pressure adjusting means and the resin pressurizing means will be explained hereinbelow.

The base portion 28B of the plate glass retaining block 28 includes a plurality of springs for glass retaining pressure adjustment 62 as the glass retaining pressure adjusting means. The springs for glass retaining pressure adjustment 62 urge the plate glass retaining portion 28A toward the movable die 16 (in other words, urge the plate glass retaining portion upward in the vertical direction). Thus, it is possible to effectively avoid a crack in the glass member by utilizing the urging force of the springs to autonomously adjust the glass retaining pressure within a certain range.

The fixed mold 26 includes a plurality of springs for resin pressurization 64 as the resin pressurizing means. Each of the springs for resin pressurization 64 urges the outer block 30A of the cavity space forming block 30 toward the movable die 16 (in other words, urges the outer block upwardly in the vertical direction).

In the apparatus for producing an integrally molded glass/resin article according to the second embodiment shown in Fig. 7, the plate glass retaining portion 28A serves as the first movable part while the outer block 30A serves as the second movable part.

### <Process for producing integrally molded glass/resin article>

Now, in the process for producing an integrally molded glass/resin article by use of the apparatus for producing an integrally molded glass/resin article 10 thus configured, the glass retaining pressure adjusting means will be described in terms of difference from that shown in Fig. 4, and explanation common to the above mentioned explanation with respect to Fig. 4 will be omitted.

Even when the mold is clamped, having a certain gap between the movable mold 22 and the fixed mold 26 as described above, the plate glass 2 is sandwiched between the movable die 16 and the fixed die 18 because the plate glass retaining portion 28A is urged by the springs for glass retaining pressure adjustment 62.

Further, the outer block 30A is brought into contact with the movable cavity block 20 of the movable die 16 because the cavity space forming block 30 has the outer block 30A urged by the springs for resin pressurization 64. In this way, the cavity space 14 is formed around the periphery of the plate glass 2.

Next, an injection unit (not shown) is utilized to inject a resin for the resin molding into the cavity space 14 to fill the resin in the cavity space 14.

Next, the movable die 16 is moved toward the fixed die 18. In other words, the mold 12 is further clamped. This operation closes the gap that has been formed between the movable mold 22 and the fixed mold 26 in the initial clamping operation.

When the mold 12 is furthermore clamped, the outer block 30A is pushed by the movable die 16 against the urging force of the springs for resin pressurization 64 to move downward in the vertical direction. As a result, the inner block 30B is relatively projected into the cavity space 14 to decrease the volume of the cavity space 14. Thus, the resin filled in the cavity space 14 is pressurized.

On the other hand, when the resin is pressurized as described above, a high pressure is applied to the plate glass 2. The pressure applied during pressurization can be released because the plate glass retaining portion 28A for retaining the plate glass 2 is supported so as to be movable, being urged by the springs for glass retaining pressure adjustment 62. Thus, it is possible to prevent the plate glass 2 from being subjected to a crack.

It should be noted that the springs for glass retaining pressure adjustment 62 have a spring force set so as to be weaker than the spring force of the springs for resin pressurization 64 since the springs for glass retaining pressure adjustment 62 have the function of releasing the pressure applied to the plate glass 2 during resin pressurization.

When the spring force of the springs for glass retaining pressure adjustment is too weak, the plate glass 2 is, however, subjected to misregistration. From this viewpoint, the spring force of the springs for glass retaining pressure adjustment is set so as to apply a pressure enough to avoid misregistration in the plate glass 2.

The pressurization is continuously performed for a certain period of time, and then the mold 12 is opened to take out the integrally molded glass/resin article 1.

Thus, the production of the integrally molded glass/resin article 1 is completed by these series of steps.

As described above, the resin pressurizing means for pressurizing a resin and the glass retaining pressure adjusting means for adjusting the pressure applied to the plate glass 2 may include such springs to have a similar function and advantage to the use of cylinders.

Although both of the resin pressurizing means and the glass retaining pressure adjusting means include such springs in this example, one of the means may include cylinders.

The resin pressurizing means and the glass retaining pressure adjusting means may include, e.g. moving mechanisms using motors and feed screws.

When the resin pressurizing means and the glass retaining pressure adjusting means include springs, there is not particular limitation to the kinds of the springs. For example, coil springs and disc springs may be employed. When disc springs are employed, the number of the disc springs may be varied to adjust the spring force.

### «Apparatus for producing integrally molded glass/resin article according to third embodiment»

### <Apparatus structure>

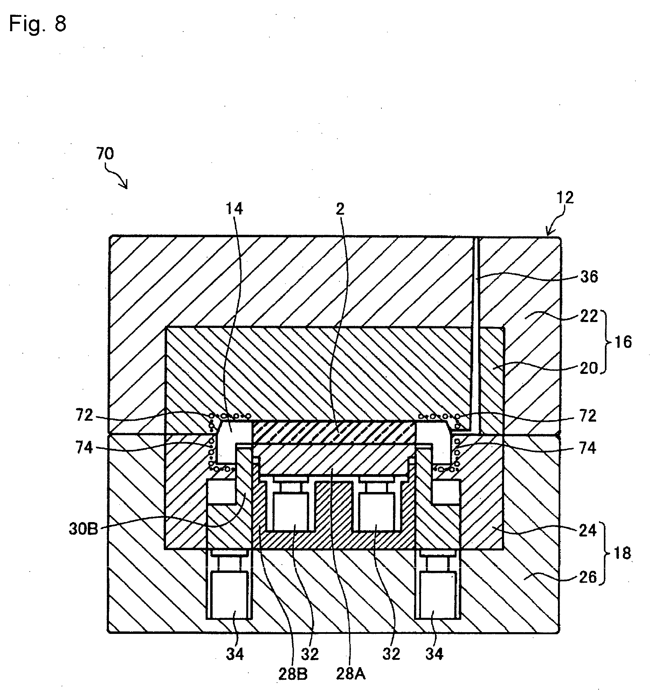

Fig. 8 is a front cross-sectional view showing the apparatus 70 for producing an integrally molded glass/resin article 1 according to a third embodiment of the present invention.

The production apparatus 70 is different from the production apparatus 10 shown in Fig. 3 in that a plurality of cooling pipes 72 as the cooling means, and wire heaters (hereinbelow, referred to as heaters) 74 as the resin temperature keeping means are included and that the inner block 30B, which forms a part of the mold 12, is utilized as a demolding means as well. Because the other elements are the same as the production apparatus 10, the structures and functions of the cooling pipes 72, the heaters 74 and the inner block 30B will be explained.

### [Cooling pipe 72]

The cooling pipes 72 are connected to an unshown coolant supply feeder and supplied with a coolant by the coolant supply feeder. Thus, the cooling pipes 72 are cooled. The cooling pipes 72 are disposed in the movable cavity block 20 and the fixed cavity block 24, which form the cavity space 14. The cooling pipes 72 are disposed in the vicinity of inner wall surfaces of the cavity space 14 formed by the movable cavity block 20 and the fixed cavity block 24 (i.e. at the movable recess 20A and the fixed recess 24A). Thus, when the cooling pipes 72 are cooled, the inner wall surface is effectively cooled.

The supply of a coolant into the cooling pipes 72 is conducted in a resin cooling sub-step, which is included as a subsequent step to the step of subjecting the resin to pressure molding or the step of adjusting the glass retaining pressure. Thus, in the unsolidified resin 3 filled in the cavity space 14, a part of the resin 3 in contact with the inner wall surface and a part of the resin 3 filled at the jointed part between the resin 3 and the glass member 2 are cooled and solidified earlier than the remaining parts of the unsolidified resin (i.e. an inner part of the resin the molded frame) 3.

It should be noted that although the cooling pipes 72 are employed as the cooling means in this embodiment, the present invention is not limited to this embodiment, and air cooling pipes may be employed such that cooling air is supplied to the air cooling pipes to cool the inner wall surface. In other words, any means for cooling the inner wall surface may be applied.

### [Heaters 74]

The heaters 74 are disposed in the vicinity of the inner wall surface as in the cooling pipes 72. The heaters 74 are connected to an unshown voltage applying unit such that an voltage is applied to the heaters by the voltage applying unit. Thus, the heaters 74 are heated to effectively heat the inner wall surface.

The application of an voltage to the heaters 74 is conducted in a resin temperature keeping sub-step (i.e. mold-preheating step), which is a pre-step prior to the resin cooling sub-step and to the step of filling the resin 3 into the cavity space 14. In other words, after the heaters 74 preheat the mold 12, the resin is filled into the cavity space 14.

The preheating temperature of the mold 12 by the heaters 74 is set at, e.g. a temperature of not lower than the glass transition point of the resin 3 of (Tg) minus 10°C. The upper limit of the preheating temperature is set at a temperature at which the resin 3 is not subjected to deterioration.

In this way, the unsolidified resin 3 filled in the cavity space 14 is kept at a temperature of not lower than the glass transition point (Tg) minus 10°C in the resin temperature keeping sub-step. It should be noted that the resin temperature keeping sub-step may be conducted concurrently with the step of subjecting the resin to pressure molding or the step of adjusting the glass retaining pressure.

### [Inner block 30B as demolding means]

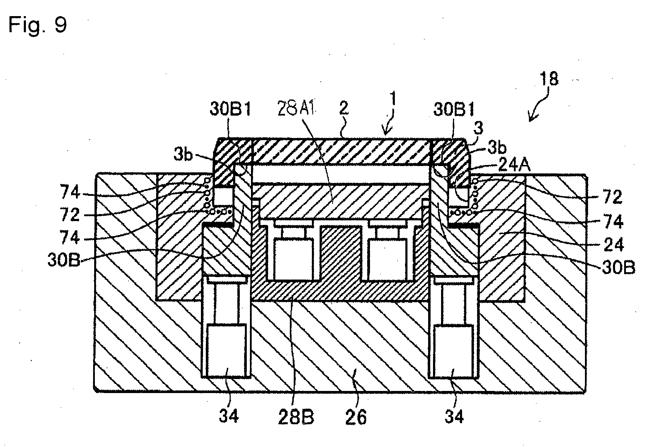

Fig. 9 is a cross-sectional view showing an integrally molded glass/resin article demolded from the fixed die 18, and the fixed die 18.

The integrally molded glass/resin article 1 molded by the mold 12 (see Fig. 1) is demolded from, in particular, the fixed recess 24A of the mold 12 to be taken out (see Fig. 4(F)). In the demolding step, the inner block 30B forming a part of the mold 12 is utilized as a demolding means. Specifically, as shown in Fig. 9, the cylinders 34 for resin pressurization move the inner block 30B upward to bring a frame-like top side (planar portion) 30B1 of the inner block 30B in contact with the resin rear surface 3b of the resin 3. Then, the inner block 30B further moves upward to thrust out (or demold) the integrally molded glass/resin article 1 from the fixed recess 24A.

### <First process for producing integrally molded glass/resin article by production apparatus 70>

A first production process is a production process which includes a resin cooling sub-step of cooling the inner wall surface by the cooling pipe 72 without including the resin temperature keeping sub-step of preheating the mold 12 by the heaters 74.

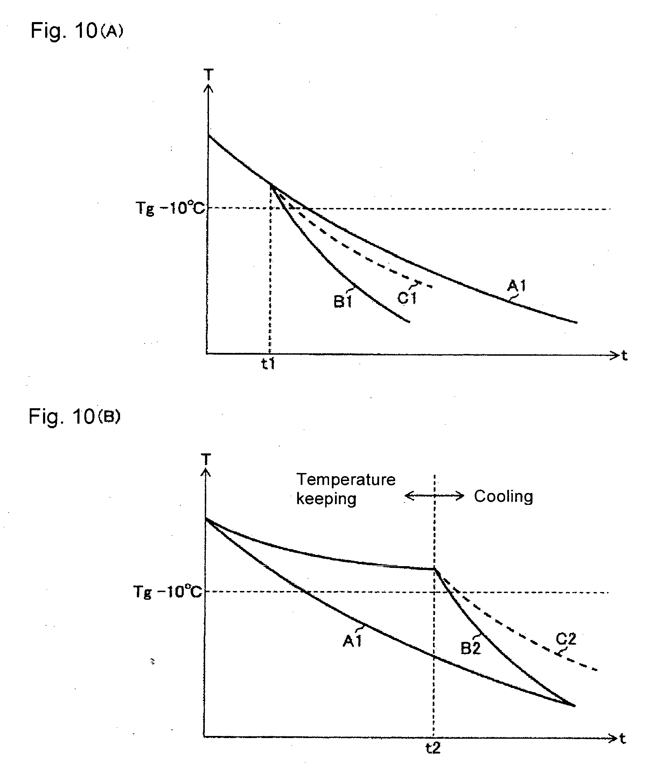

First, in order to clarify the first production process by comparison, the production process including no resin cooling sub-step as shown in Fig. 4, and the first production process will be explained in reference to the graph shown in Fig. 10(A).

The vertical axis of the graph shown in Fig. 10(A) indicates temperatures of the resin 3 filled in the cavity space 14, and the horizontal axis indicates the lapse of time.

A curve A1 indicates a temperature-descending-gradient in a case where the resin 3 filled in the cavity space 14 is naturally cooled. In other words, the curve A1 indicates the temperature-descending-gradient in the production process shown in Fig. 4 where no resin cooling sub-step is included.

On the other hand, a curve B1 in this figure indicates a temperature-descending-gradient of a part of the resin 3 filled in the cavity space 14 and cooled in the resin cooling sub-step (such as, a part of the resin at the jointed part) while a curve C1 indicates a temperature-descending-gradient of a part of the resin 3 little subject to the cooling effect in the resin cooling sub-step (such as, an inner part of the molded resin frame). The resin cooling sub-step commences just after the step of subjecting the resin to pressure molding or the step of adjusting the glass retaining pressure and at a time of T1 when the resin 3 has a temperature of not lower than the glass transition point (Tg) minus 10°C.

In the production process shown in Fig. 4, the unsolidified resin 3, which has been filled in the cavity space 14 and has a temperature of not lower than the glass transition temperature (Tg), is naturally cooled as indicated by the curve A1 of Fig. 10(A), starts being solidified at a temperature lower than the glass transition point, loses fluidity and is finally solidified in a certain shape. A part of the unsolidified resin 3 filled in the jointed part is solidified, being filled in the jointed part, because of being pressurized in the step of subjecting the resin to pressure molding. In this way, it becomes possible to carry out molding operation free from the formation of a sink at the jointed part.

Now, explanation will be made about the first production process.

In the first production process, the part of the unsolidified resin 3 filled in the jointed part and subjected to pressurization is cooled in the resin cooling sub-step. Specifically, as indicated by the curves B1 and C1 in Fig. 10(A), a temperature difference is generated between the part of the unsolidified resin 3 filled in the jointed part (part of the resin frame having a temperature-descending-gradient indicated by the curve B1) and the inner part of the unsolidified resin 3 (inner part of the resin frame having a temperature-descending-gradient indicated by the curve C1) such that the part of the unsolidified resin 3 filled in the jointed part is solidified earlier than the remaining parts of the unsolidified resin. This can more reliably prevent a sink from being formed at the jointed part.

In the resin cooling sub-step, the resin 3 starts to be cooled not only at the jointed part but also at a surface thereof in touch with the inner wall surface (mold). Although the unsolidified resin 3 may start to be cooled at the jointed part, the resin may start to be cooled not only at a surface thereof in touch with the inner wall surface but also at the part of the unsolidified resin filled in the jointed part in the resin cooling sub-step. The surface of the unsolidified resin 3 in touch with the inner wall surface is cooled earlier than the inner part of the unsolidified resin 3 to prevent a sink from being formed on the surface. This can provide the surface with an excellent appearance, which is appropriate to a case where the surface of the resin forms a cosmetic surface of the integrally molded article.

### <Second process for producing integrally molded glass/resin article by production apparatus 70>

The second production process is a production process which further includes the resin-temperature-keeping sub-step of keeping the temperature of the resin filled in the cavity space 14 at a temperature of not lower than the glass transition point (Tg) minus 10°C.

First, in order to clarify the second production process by comparison, explanation will be made based on the graph shown in Fig. 10(B) about the production process shown in Fig. 4 having neither resin temperature keeping sub-step nor resin cooling sub-step and the second production process.

The vertical axis of the graph in Fig. 10(B) indicates the temperature of the resin 3 filled in the cavity space 14, and the horizontal axis indicates the lapse of time.

A curve A1 in this figure is the same as the curve A1 in Fig. 10(A) and indicates a temperature-descending-gradient along which the resin 3 filled in the cavity space 14 is naturally cooled. In other words, the curve A1 indicates the temperature-descending-gradient in the production process shown in Fig. 4, which includes no resin-temperature-keeping sub-step or resin cooling sub-step.

On the other hand, a curve B2 in this figure indicates a temperature-descending-gradient of a part of the resin 3 (such as, a part of the resin at the jointed part) which was filled in the cavity space 14 and was kept at a temperature of not lower than the glass transition point (Tg) minus 10°C, followed by being cooled in the resin cooling sub-step. A curve C2 indicates a temperature-descending-gradient of a part of the resin 3 (such as, an inner part of the molded frame resin) which was little subject to the cooling effect in the resin cooling sub-step. The resin-temperature-keeping sub-step is conducted from a pre-step of filling the resin 3 into the cavity space 14 to a time t2 at which the resin 3 keeps a temperature of not lower than the glass transition point (Tg) minus 10°C. The resin cooling sub-step commence at the time t2.

According to the second production process, the unsolidified resin 3 filled in the cavity space 14 is kept at a temperature of not lower than the glass transition point (Tg) minus 10°C by the heat given by the heaters 74 in a pre-step prior to the resin cooling sub-step.

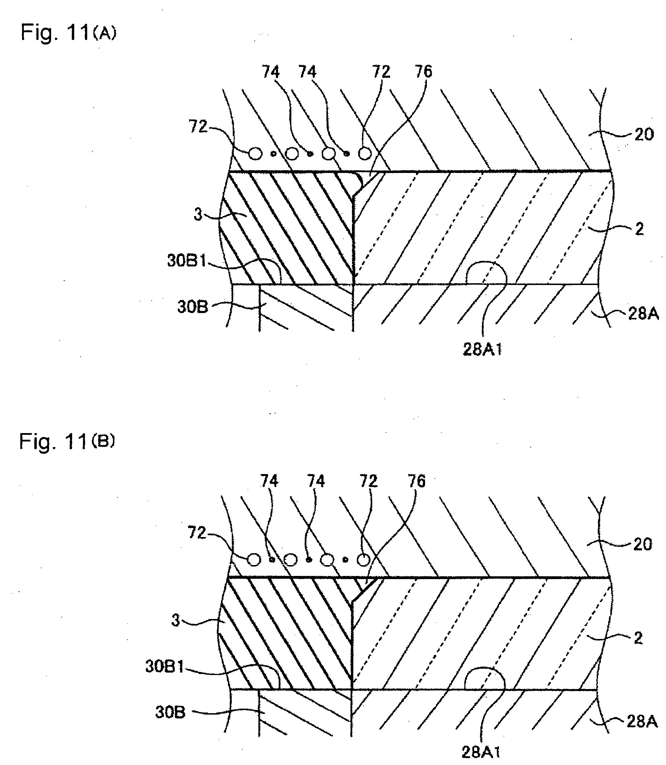

Fig. 11 (A) shows how the resin 3 is filled in the cavity space 14 in a pre-step prior to the step of subjecting the resin to pressure molding. Fig. 11 (A) reveals that the resin 3 does not reach a jointed part 76.

As shown in Fig. 10(B), a part of the resin 3 filled in the cavity 14 is cooled along a gentler temperature-descending-gradient (indicated by the curve B2) than the temperature-descending-gradient along which the resin 3 is naturally cooled (indicated by the curve A1). In the step of subjecting the resin to pressure molding conducted during cooling, the resin 3 shown in Fig. 11 (A) is pressed against the inner block 30A, keeping a soft state, and is filled into the jointed part 76 without gaps as shown in Fig. 11(B).

Then, in the resin cooling sub-step commencing at the time t2, the soft resin 3 filled in the jointed part is solidified earlier than the inner part of the unsolidified resin 3. As a result, it is possible not only to prevent a sink from being formed at the jointed part but also minimize the formation of a level difference that could be formed at the jointed part. Thus, the integrally molded glass/resin article is provided with an improved quality.

### [Demolding step]

The integrally molded glass/resin article 1 molded via the resin cooling sub-step is lifted up from the fixed recess 24A of the mold 12 so as to be demolded by the upward movement of the inner block 30B as the demolding means as shown in Fig. 9 (in other words, movement in a demolding direction) in the demolding step. At that time, the integrally molded glass/resin article 1 is lifted up by bringing a frame-like top side 30B1 of the inner block 30B in contact with the resin rear surface 3B of the resin 3. It should be noted that the plate glass retaining portion 28A may be utilized as the demolding means such that the plate glass retaining portion 28A lifts up the plate glass 2 to demold the integrally molded glass/resin article 1 from the fixed recess 24A. Or, the inner block 30B and the plate glass retaining portion 28A are both moved upward to lift up the integrally molded glass/resin article 1 from the fixed recess 24A for demolding. At that time, the inner block 30B and the plate glass retaining portion 28A may have different upward moving speeds from each other.

When an attempt is made to press the plate glass placement surface 2 (i.e. planar portion) 28A1 of the plate glass retaining portion 28A against the plate glass 2 for demolding, a stress is, however, applied to the jointed part to separate a part of the resin 3 at the jointed part from the plate glass 2 because the resin 3 just before demolding has adhered to the fixed recess 24A. From this point of view, it is preferred to press the top side 30B1 of the inner block 30B against the resin rear surface 3B of the resin 3 to demold the integrally molded glass/resin article.

Although there is a method of employing a pointed member, such as a pin, to demold the integrally molded glass/resin article 1 from the fixed recess 24A, the plate glass 2 or the molded resin of the integrally molded glass/resin article 1 is likely to be subjected to damage caused by being pressed against the pointed member. From this point of view, it is preferred to utilize a surface-like portion as the demolding means. Further, when the surface-like portion is pressed against the molded resin 3 in a case where the molded resin is a rectangular frame member for example, it is preferred to press the surface-like portion against a corner of the frame member firmly adhering to the fixed recess 24A from the viewpoint of smoothly demolding the integrally molded glass/resin article 1 out of the fixed recess 24A. It should be noted that the top side 30B1 of the inner block 30B may be pressed against the entire peripheral surface of the resin rear surface 3b of the resin 3, parts of the resin rear surface 3b of the resin 3 at two opposed sides, and parts of the resin rear surface 3b at two adjacent sides.

### «Other examples of glass member»

Although plate glass is employed as the glass member in the above-mentioned embodiments, the glass member, which has a resin molding integrally molded thereto, is not limited to the plate glass. The present invention is also applicable to, e.g. a case where a resin molding is integrally molded to an optical member, such as a glass lens.

When plate glass is employed, there is no particularly limitation to the thickness or sizes of the plate glass. Curved plate glass may be employed.

It is preferred that the bonding face of the glass member with the resin molding be surface-treated by use of a silane coupling agent and/or a primer. For example, in the case of the integrally molded glass/resin article 1 according to the above-mentioned embodiments, the glass lateral end faces 2c of the plate glass 2 are surface-treated. By this treatment, it is possible to improve the adhesiveness between the glass member and the resin forming the resin molding.

As the silane coupling agent, a vinyl group-containing silane coupling agent, a styryl group-containing silane coupling agent, an amino group-containing silane coupling agent, an epoxy group-containing silane coupling agent, a methacryloyloxy group-containing silane coupling agent, an acryloylxy group-containing silane coupling agent etc. may be employed. As the primer, a primer which is obtainable by diluting, e.g. an urethane resin, an acrylic resin, a silicone resin or an epoxy resin with a solvent may be employed.

The glass member may have an adhesive layer disposed on the bonding face with the resin molding. For example, in the case of the integrally molded glass/resin article 1 according to the above-mentioned embodiments, the plate glass 2 has an adhesive layer disposed on the glass lateral end faces 2c. Thus, it is possible to improve the adhesiveness between the glass member and the resin molding. As the adhesive, a silicone-based, urethane-based or epoxy-based adhesive having an excellent adhesiveness, a double-sided adhesive tape etc. may be favorably employed.

Although there is no particular limitation to the glass composition of the glass member, known soda lime glass, alkali-free glass or the like may be favorably employed. The glass member may be tempered glass subjected to physical tempering treatment or chemical tempering treatment by a conventional known method. When chemical tempering treatment is performed, it is necessary to select glass containing an alkaline component. Soda lime glass or alkali aluminosilicate glass is preferred.

When plate glass is employed, a glass plate having a resin film and plate glass laminated therein (so-called bilayer glass) may be employed, or laminated glass having plural sheets of plate glass and an interlayer laminated therebetween may be employed. In the latter case, the respective sheets of plate glass may have the same glass composition as or different glass compositions from each other, and organic glass made of inorganic glass, a transparent resin and so on may be combined.

The plate glass may be formed in a planer shape. Curved plate glass having a curvature in a desired shape may be employed. The glass member may be tempered glass subjected to tempering treatment by a known method. The glass member may have a film (such as an antifouling film) disposed on a glass surface thereof. In this case, the front surface of the film (side of the film remote from the glass member) forms a glass surface.

### «End face treatment of plate glass»

When plate glass is employed as the glass member, plate glass may have a chamfered part formed at a corner between a glass surface and a lateral glass side face. In this case, chamfering may be conducted by C chamfering, in other words, chamfering conducted by diagonally cutting off the corner of an end face of plate glass) or R chamfering, in other words, chamfering conducted by rounding the corner of an end face of plate glass). Even when plate glass having such a chamfered part is employed, the resin can be subjected to pressure molding to produce an integrally molded glass/resin article without producing any gap or level difference at a jointed part between the plate glass and the resin molding.

The use of plate glass subjected to chamfering as described above facilitates the handling of plate glass.

With regard to a chamfered part, it is preferred to conduct C chamfering. C chamfering can improve the flatness of a jointed part between plate glass and the resin molding in comparison with R chamfering.

Plate glass that is not subjected to such end face treatment may be employed. In other words, plate glass may be cut in a certain size, followed by being employed without having a cut end face subjected to end face treatment. Thus, it is possible to reduce the cost required for pretreating plate glass to be employed.

Further, it is helpful to produce a high quality of integrally molded glass/resin article which has no gap or level difference produced at a jointed part between the plate glass and the resin molding.

### «Resin molding (resin)»

As the material for the resin forming a resin molding, a thermoplastic resin may be favorably employed.

There is no particular limitation to the thermoplastic resin as long as it can be integrally molded to plate glass 2 by melt molding. Examples of the thermoplastic resin include thermoplastic polyester resin (such as a polyethylene terephthalate resin, and a polybutylene terephthalate resin), a mixture of a thermoplastic polyester resin and another resin, a polymer alloy, a modified polyester resin, an aromatic polyester resin, a liquid crystal polymer, a polyphenylene sulfide resin, a polyamide resin, a polyimide resin, a polyamidimide resin, a polyetherimide resin, a polyolefin resin (such as a polyethylene resin, a polypropylene resin and a polybutene resin), their modified resin, a polymethylpentene resin, a polystyrene resin, a poly α-methylstyrene resin, an AS resin, an ABS resin, a petroleum resin, a polycarbonate resin, a mixture of a polycarbonate resin and another resin, a polymer alloy of a polycarbonate resin and ASA etc., a polysulfone resin, a polyether sulfone resin, a polyarylsulfone resin, a polyarylate resin, a polyoxymethylene resin, a polyether ether ketone resin, a polyallyl ether nitrile resin, a polybenzimidazole resin, a polyvinyl chloride resin, a fluororesin, a polyphenylene oxide resin, a modified polyphenylene oxide resin, a (meth)acryl resin, a norbornene resin, and a thermoplastic polyurethane resin.

### <Liquid crystal polymer, crystalline resin>

Among these thermoplastic resins, a liquid crystal polymer or a crystalline resin is preferred in the viewpoint of being excellent in melt fluidity due to low shear stress such that injection can be made into a mold under a low pressure or being unlikely to form a burr.

The liquid crystal polymer (LCP) may be any one of a crystal polymer having a nematic liquid crystal layer, a crystal polymer having a smectic liquid crystal layer and a crystal polymer having a discotic liquid crystal layer, or mainly include repeating units derived from any one of aromatic hydroxy carboxylic acid, aromatic dicarboxylic acid and aromatic diol. A thermotropic liquid crystalline polymer is particularly preferred because of being melt-moldable.

Such polymers having various kinds of physical properties have been commercially available, and any one of them may be favorably employed. For example, RODRUN LC-5000, RODRUN LC-5000F and RODRUN LC-5000H (names of products manufactured by UNITIKA); XYDAR SRT-300, XYDAR SRT-500, XYDAR-FSR-315, XYDAR-RC-210, XYDAR FC-110, XYDAR FC-120 and XYDAR FC-130 (names of the products manufactured by Nippon Petrochemicals Co., Ltd.); EKONOL E2000 and EKONOL E6000 (names of products manufactured by Sumitomo Chemical Industry Company Limited); EPE-240G30, NOVACCURATE E322G30 and NOVACCURATE E335G30 (names of the products manufactured by Mitsubishi Chemical Corporation); VECTRA A950, VECTRA A130, VECTRA C130, VECTRAA230 and VECTRAA410 (names of the products manufactured by POLYPLASTICS CO., LTD.); BIAC (name of the product manufactured by Japan GORE-TEX); OCTA (name of the product manufactured by Dainippon Ink and Chemicals, Incorporated (DIC)); Zenite (name of the product manufactured by DuPont); Novaccurate (name of the product manufactured by MITSUBISHI ELECTRIC ENGINEERING Co., Ltd.); or SIVERAS (name of the product manufactured by Toray Industries, Inc.) may be employed.

Examples of the crystalline resin (excluding a liquid crystal polymer) include a polyphenylene sulfide resin (PPS), a polyethylene terephthalate resin (PET), a polybutylene terephthalate resin (PBT), an aromatic polyester resin, a polyether ether ketone resin (PEEK), a polyether nitrile resin (PEN), a polyamide resin (nylon resin), (such as, polyamide 6, polyamide 66, polyamide 11, polyamide 12, polyamide 46, polyamide 620, polyamide 612 and polyamide MDX6), a polyoxymethylene resin (POM), a polyethylene resin (such as, low-density polyethylene, middle-density polyethylene and high-density polyethylene), a polypropylene resin, a polystyrene resin (such as, syndiotactic polystyrene), a polybutene resin, a polymethyl pentene resin, a fluororesin, and a polyimide resin.

The crystalline resin (excluding a liquid crystal polymer) may be preferably a polyphenylene sulfide resin, a polyethylene terephthalate resin, a polybutylene terephthalate resin, an aromatic polyester resin, a polyamide resin, a polyoxymethylene resin or a polyimide resin, more preferably a polyphenylene sulfide resin.

In one mode of the production process according to the present invention, the resin forming the resin molding may include one of the above-mentioned thermoplastic resins as a base resin wherein a compound containing a hydroxy group and/or an epoxy group in a molecule thereof is compounded. By compounding a compound containing a hydroxy group and/or an epoxy group to a thermoplastic resins as the base resin, it is possible to significantly improve the adhesiveness between a resin molding and plate glass 2.

### <Compound containing a hydroxy group and/or an epoxy group>

The compound containing a hydroxy group and /or an epoxy group is preferably a compound that is not subjected to foaming or decomposition when being is heated and melted with a thermoplastic resin.

Examples of the compound containing a hydroxy group in a molecule thereof include various kinds of alcohol, polyvinyl alcohol, a modified product or copolymer of polyvinyl alcohol, polyvinyl butyral, ethylene glycol, glycerin, phenol, a phenol resin, a compound modified with, e.g. epichlorohydrin, a phenoxy resin, hydroxyethyl(meta)acrylate (HEMA), and a natural macromolecule (such as cellulose, a cellulose derivative, starch, chitin, chitosan, cyclodextrin, trehalose, palatinose or ormaltose).

Examples of the compound containing an epoxy group in a molecule thereof include glycidyl alcohol, glycidyl (meth) acrylate and an epoxy resin.

The compound containing a hydroxy group and/or an epoxy group is preferably a polymer compound containing a hydroxy group or an epoxy group, more preferably a resin containing a hydroxy group or an epoxy group.

The resin containing a hydroxy group is preferably a phenoxy resin while the resin containing an epoxy group is preferably an epoxy resin.

Examples of the phenoxy resin include a bisphenol-A-phenoxy resin, a bisphenol-F-phenoxy resin and a copolymer phenoxy resin of bisphenol-A and bisphenol-F. The phenoxy resin has a mass-average molecular weight of preferably from 10,000 to 200,000, more preferably from 20,000 to 100,000 (calculated as polystyrene according to the GPC measurement (gel permeation chromatography)).

As such phenoxy resins, ones that have been commercially available may be chosen. For example, PKHC, PKHH, PKHJ, PKHB, PKFE and PKHP (names of the products manufactured by InChem Corp.), YP-50, YP-50S, YP-55, YP-70 and FX239 (names of the products manufactured by Tohto Kasei Co., Ltd.), Epikote E1256, Epikote E4250 and Epikote E4275 (names of the products manufactured by Union Carbide Corporation), and UCAR, PKHC and PKHH (names of the products manufactured by Tohto Kasei Co., Ltd.) may be employed. One of them may be solely employed or at least two kinds of them may be employed in combination.

The polymer compound containing a hydroxy group has a hydroxy group content of preferably from 0.01 to 23 mol/kg polymer, more preferably from 0.1 to 15 mol/kg polymer, and further preferably from 1 to 10 mol/kg polymer. In particular, with respect to the phenoxy resins, the hydroxy group content preferably ranges from 3 to 7 mol/kg polymer (resin), most preferably from 3 to 5 mol/kg polymer (resin).

Examples of the epoxy resin include a bisphenol type epoxy resin, such as bisphenol A type epoxy resin, bisphenol F type epoxy resin, or bisphenol S type epoxy resin; a novolak type epoxy resin, such as a phenol novolak type epoxy resin, an o-cresol novolak type epoxy resin, a biphenyl novolak type epoxy resin; a biphenyl type epoxy resin; a naphthalene type epoxy resin; a triphenylmethane type epoxy resin, a dicyclopentadiene type epoxy resin; an alicyclic epoxy resin; and a glycidyl-type epoxy resin, such as a glycidyl ether type epoxy resin, or a glycidyl ester type epoxy resin. One of them may be solely employed or at least two kinds of them may be employed in combination.

Such epoxy resins having various kinds of physical properties have been commercially available as in the phenoxy resins and may be favorably employed by being chosen so as to match the purpose of use.

The epoxy resin has a mass-average molecular weight of preferably from 700 to 200,000, more preferably from 900 to 100,000 (calculated as polystyrene according to the GPC measurement).

The polymer compound having an epoxy group has an epoxy group content of preferably from 0.01 to 10 mol per kg polymer, more preferably from 0.1 to 8 mol per kg polymer.

The phenoxy resin and the epoxy resin may each be solely employed or employed in combination.

In one mode of the invention, instead of preparing the resin compound by compounding a compound containing a hydroxy group and/or an epoxy group in one of the above-mentioned thermoplastic resins, it is acceptable to prepare the resin compound by grafting such a compound in any one of the above-mentioned thermoplastic resin in advance or by modifying any one of the above-mentioned thermoplastic resin with such a compound so as to introduce, e.g. a hydroxy group and/or an epoxy group in the thermoplastic resin.

### <Blending ratio>

In one mode of the invention, a compound containing a hydroxy group in a molecule thereof and/or a compound containing an epoxy group in a molecule thereof has a blending quantity of preferably from 1 to 90 parts by mass, more preferably from 3 to 80 parts by mass based on 100 parts by mass of the thermoplastic resin.

When the above-mentioned compound has an excessively small blending quantity, the adhesiveness between the resin composition and the plate glass 2 becomes insufficient in some cases. When the blending ratio is excessive, the basic properties of the thermoplastic resin as the base resin are impeded, making it difficult to obtain a resin molding having high strength or making the adhesiveness worse in some cases. As long as the blending quantity is within one of the ranges, the adhesiveness between the resin composition and the plate glass 2 is excellent, and the resin molding has excellent strength.

### <Filler etc.>

Further, the resin composition in one mode of the invention may have a filler compounded therein in a quantity that does not damage the object of the invention. Examples of the filler in a fibrous form include inorganic fiber, such as glass fiber, carbon fiber, potassium titanate fiber, aluminum borate fiber or metal fiber; and organic fiber, such as aramid fiber, vinylon fiber or linen fiber. Examples of the filler in a various forms, such as a granular form, a spherical form, a flake form, a needle form or a plate form, include silica, alumina, talc, clay, kaolin, aluminum hydroxide, magnesium hydroxide and calcium carbonate. Examples of the filler in a plate form include mica and a glass flake. Examples of the filler in a hollow shape include a shirasu balloon, a glass balloon and various kinds of resin balloons. These fillers may be solely employed, or at least two kinds of them may be employed in combination.

In the resin composition in one mode of the invention, a coloring agent, pigment, a thermal stabilizer, an antioxidant, a stabilizer, an ultraviolet absorbing agent, a compatibilizer, a dispersing agent, a lubricant, a mold releasing agent and another additive may be compounded in a quantity that does not depart from the object of the invention. Another thermoplastic resin may be auxiliarily compounded in a small quantity.

### <Preparation of the resin compound>

The preparation of the resin compound in one mode of the invention may be implemented by various known methods. The preparation may be implemented, for example, by preliminarily blending a component of a thermoplastic resin and a component of a compound containing a hydroxy group and/or an epoxy group in a molecule thereof, and adding another component, such as a filler, to these components as needed, in a certain ratio by a V type blender or a Henschel mixer, followed by melting and kneading the mixture by an extruder. Or, the respective components may be separately supplied to an extruder to be melt and kneaded.

### «Application of integrally molded glass/resin article»

There is no particular limitation to the application of the integrally molded glass/resin article according to the present invention. The integrally molded glass/resin article may be applied, for example, to the cover member of a liquid crystal display in an electric appliance with a touch panel, the instrument panel mounted to an automobile and the like, and an integrally molded glass/resin article for a vehicle exterior.

### INDUSTRIAL APPLICABILITY

In accordance with the present invention, it is possible to produce an integrally molded glass/resin article which has the formation of gaps or level differences extremely minimized at a jointed part and has a quality appearance. The present invention is useful to the production of an integrally molded glass/resin article, such as a cover member with a resin frame for a liquid crystal display or touch panel in a domestic or industrial electrical appliance, a cover member for an electronic appliance including a television, a smartphone, a portable music player, and a portable game console, a note PC and a tablet PC, a cover member for a so-call wearable electronic device, such as a smart watch and smart glasses, an instrument panel with a resin frame mounted in the interior of an automobile etc., a head-up display, an interior display, an interior display or electronic advertising device mounted in a rolling stock, an airplane, a bus or the like, a glass window with a resin frame for a vehicle employed on the exterior of an automobile or the like, a headlamp, a tail lamp, a turn indicator lamp, a mirror, a spoiler, and cover glass for various sensors.

The entire disclosures of Japanese Patent Application No. 2013-272583 filed on December 27, 2013 and PCT Application No. PCT/JP2014/062192 filed on May 2, 2014 including specifications, claims, drawings and summaries are incorporated herein by reference in their entireties.

### REFERENCE SYMBOLS

1: integrally molded glass/resin article, 2: plate glass, 2a: glass front surface, 2b: glass rear surface, 2c: glass lateral end face, 3: frame or resin, 3A: frame-like leg, 3a: resin front surface, 3b: resin rear surface, 3c: outer resin lateral end face, 3d: inner resin lateral end face, 10: apparatus for producing an integrally molded glass/resin article, 12: mold, 14: cavity space, 16: movable die, 18: fixed die, 20: movable cavity block, 20A: movable recess, 22: movable mold, 22A: movable cavity block fitting portion, 24: fixed cavity block, 24A: fixed recess, 26: fixed mold, 26A: fixed cavity block fitting portion, 28A: plate glass retaining block (first movable part), 28A1: plate glass placement surface, 28A2: guiding convex portion, 28B: base portion, 28B1: guiding recess, 30: cavity space forming block, 30A: outer block, 30B: inner block (second movable part), 32: glass retaining pressure adjusting cylinder, 34: resin pressurizing cylinder, 36: sprue, 38: gate, 62: resin pressurizing spring, 64: resin pressurizing spring, 70: production apparatus, 27: cooling pipe, 74: heater, 76: jointed part

## Claims

1. A process for producing an integrally molded glass/resin article having a resin molding on a periphery of a glass member, comprising:
a step of placing a glass member in a mold for molding a resin molding, clamping the mold, and sandwiching the glass member by the mold;
a step of injecting a resin for forming the resin molding into a cavity space formed at at least a part of the periphery of the glass member by clamping the mold, and filling the resin in the cavity space; and
a step of subjecting the resin to pressure molding with the resin filled in the cavity space being pressured at a certain resin compression pressure;
the process further comprising a step of adjusting a glass retaining pressure in cooperation with the pressurization of the resin, in the step of subjecting the resin to pressure molding, such that the glass retaining pressure applied to the glass member is within a certain range.

2. The process according to Claim 1, wherein in the step of subjecting the resin to pressure molding, the molding is carrying out while the glass-retaining pressure is increasing.

3. The process according to claim 1, wherein in the step of subjecting the resin to pressure molding, the molding is carrying out while the glass-retaining pressure is decreasing.

4. The process according to any one of Claims 1 to 3, wherein the glass-retaining pressure is within a range, the range having an upper limit lower than a pressure under which the glass member sandwiched by the mold is subjected to a crack, and a lower limit higher than a pressure under which the glass member sandwiched by the mold is subjected to a misregistration.

5. The process according to any one of Claims 1 to 4, further comprising a resin cooling sub-step of cooling at least a part of the filled resin at the jointed part between the filled resin and the glass member as a subsequent step following the step of subjecting the resin to pressure molding or the step of adjusting the glass retaining pressure.

6. The process according to Claim 5, wherein the filled resin starts to be cooled at the jointed part or at a surface thereof in touch with the mold in the resin cooling sub-step.

7. The process according to Claim 5 or 6, further comprising a resin-temperature-keeping sub-step of keeping the temperature of the filled resin at a temperature of not lower than the glass transition point (Tg) minus 10°C in any one of the steps from a step prior to the resin cooling sub-step to the resin cooling sub-step.

8. The process according to Claim 7, further comprising a mold-preheating step of preheating the mold, as a step prior to the step of filling the resin, such that the temperature of the resin filled in the cavity space is kept at a temperature of not lower than the glass transition point (Tg) minus 10°C.

9. The process according to any one of Claims 1 to 8, further comprising a demolding step of demolding a molded integrally molded glass/resin article out of the mold,
wherein in the demolding step, a demolding means having a surface-like portion so as to form a part of the mold is moved in a demolding direction such that the surface-like portion of the demolding means pushes the molded article out of the mold.

10. The process according to any one of Claims 1 to 9, wherein the glass member is plate glass.

11. The process according to Claim 10, wherein a principle side of the plate glass and a principle side of the resin molding, which at least partly form a cosmetic surface of the integrally molded article, are flush with each other.

12. The process according to Claim 10 or 11, wherein the plate glass has a chamfered part at a corner formed between the principal side and a lateral side face.

13. The process according to anyone of Claims 10 to 12, wherein the plate glass has an adhesive layer disposed on a side to be bonded with the resin molding.

14. An apparatus for producing an integrally molded glass/resin article with a resin molding disposed on a periphery of a glass member, comprising:
a mold having a first die and a second die combined such that the mold is clamped to sandwich a glass member between the first die and the second die and to form a cavity space at least partly around the periphery of the clamped glass member so as to have a shape corresponding to a shape of the resin molding; and
a resin injection means for injecting a resin into the cavity space of the clamped mold;
wherein at least one of the first die and the second die is configured such that at least one part of a glass member retaining portion for holding the glass member is disposed as a first movable portion so as to be movable along a clamping direction, at least one part of an area forming the cavity space is disposed as a second movable part so as to be movable along the clamping direction; and
wherein the apparatus further comprises a resin pressurizing means for moving the second movable part to pressurize the resin filled in the cavity space, and
a glass retaining pressure adjusting means for moving the first movable portion to adjust a glass retaining pressure applied to the glass member such that the glass retaining pressure applied to the glass member is within a certain range during pressurization by the resin pressuring means.

15. The apparatus according to Claim 14, wherein the glass retaining pressure adjusting means comprises a glass retaining pressure controlling means which adjusts, in cooperation with the pressurization of the resin by the resin pressurizing means, the glass retaining pressure applied to the glass member.

16. The apparatus according to Claim 15, wherein the glass retaining pressure controlling means sets the glass retaining pressure within a certain range from a lower pressure than a pressure under which the glass member clamped by the mold is subjected to a crack to a higher pressure than a pressure under which the glass member clamped by the mold is subjected to misregistration.

17. The apparatus according to any one of Claims 14 to 16, wherein the resin pressurizing means comprises:
a resin pressurizing cylinder to move the second movable part to pressurize the resin filled in the cavity space, and
a cylinder controlling means for resin pressurization.

18. The apparatus according to any one of Claims 14 to 16, wherein the resin pressurizing means is a spring to urge the second movable part in the clamping direction such that the first die and the second die are moved in a direction to be brought closer to each other to pressurize the resin filled in the cavity space.

19. The apparatus according to any one of Claims 14 to 18, wherein the glass retaining pressure adjusting means comprise a spring to urge the glass member retaining portion in the clamping direction.

20. The apparatus according to any one of Claims 14 to 18, wherein the glass retaining pressure adjusting means comprises:
a glass retaining pressure adjusting cylinder to move the first movable part to adjust a pressure applied to the glass member, and
a cylinder controlling means for glass retaining pressure adjustment to control the glass retaining pressure adjusting cylinder.

21. The apparatus according to any one of Claims 14 to 20, wherein the mold further comprises a cooling means for cooling the resin filled in the cavity space.

22. The apparatus according to any one of Claims 14 to 21, wherein the mold further comprises a resin-temperature-keeping means for keeping the temperature of the resin filled in the cavity space at a temperature of not lower than the glass transition point (Tg) minus 10°C.

23. The apparatus according to Claim 22, wherein the resin-temperature-keeping means comprises a heater to heat at least the mold.
